# EUROPEAN PATENT SPECIFICATION

(11) **EP 0 432 198 B1**
(45) Date of publication and mention of the grant of the patent: **28.02.1996**
(21) Application number: 89909886.7
(22) Date of filing: 05.09.1989
(51) Int. Cl.: H04B 7/26

(54) **METHOD AND SYSTEM IN A WIDE AREA RADIO COMMUNICATION NETWORK**
VERFAHREN UND SYSTEM FÜR EIN GROSSFLÄCHEN-FUNKKOMMUNIKATIONSSYSTEM
PROCEDE ET SYSTEME UTILISES DANS UN RESEAU DE TRANSMISSION RADIO LONGUE DISTANCE

(30) Priority: 05.09.1988 SE 8803094
(43) Date of publication of application: 19.06.1991
(73) Proprietor: INVENTAHL AB, S-212 32 Malmö (SE)
(72) Inventor: Ahl, Karl-Axel, S-212 32 Malmö (SE); Nelson, Joakim, S-222 70 Lund (SE)
(74) Representative: Baronetzky, Klaus, Dipl.-Ing.
(86) International application number: SE8900470
(87) International publication number: WO9003071

(56) References cited:
- EP-A- 0 201 254
- US-A- 4 144 496
- US-A- 4 414 661
- US-A- 4 633 463
- US-A- 4 759 051

## Description

The invention relates to a method and a system in a wide area radio communication network, comprising at least two central stations, each cental station being assigned to one or more peripheral station.

To make possible for a plurality of users of wide area mobile or stationary radio systems to utilize common communication resources methods of time and/or frequency sharing (e.g. TDMA, ALOHA, CSMA, Polling, FDMA) have been developed. The first method developed was frequency sharing. The Nordic mobile telephone system NMT is based on this method. According to the frequency sharing method the users are allocated a certain channel at a certain frequency during the communication. Time sharing is a more modern method.

Digital wide area systems normally use time sharing, some times in combination with frequency sharing.

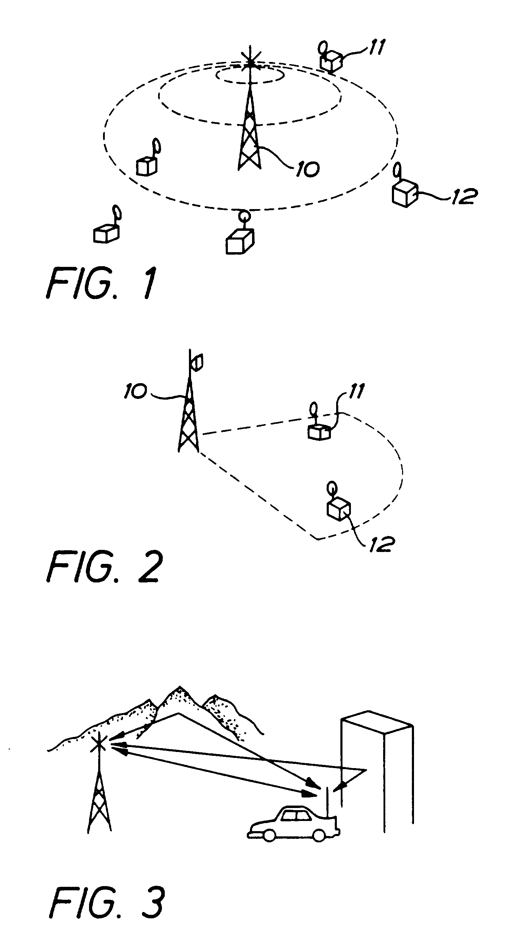

A drawback of the prior art methods for sharing resources is that the central station disposed in the center of the area must be able continuously to reach the peripheral stations spread out in each cell area or sector (e.g. within 360° or 90°.; see figs 1 and 2).

The quality of digitally transmitted signals is affected by reflection and diffraction, see fig 3. By using omni directional or sector directional antennas the transmission capacity is limited. This is a difficult problem especially in mobile systems.

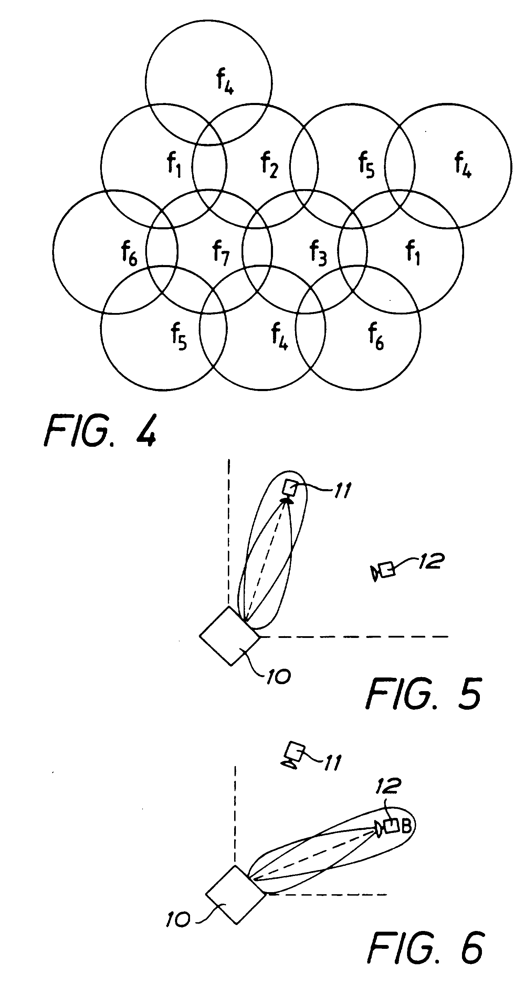

Another drawback in current systems is that an ongoing information process between two stations results in transmission and reception in undesired directions. Small cell configurations such as those shown in fig 4 are common in radio area networks.

EP,A3,0201254 discloses a more developed radio communication system which utilizes spot beams, time division multiple access, and frequency-use to provide communication service from a central station to remote customers within a system service region. The central station provides multistage switching on intermediate frequency level to form a spotted beam in different directions so as to permit the respective sharing of radio transmitters and receivers over a major number of antenna transmitting and receiving ports. At the super central station, each section of the service area is covered by a different one of a raster of spot beams which are switched in accordance with a TDMA frame. A small number of transmission frequencies are re-used by different spot beams. The signal output energy is constant, regardless of the distance between the central station and the customer stations.

US-A-4,414,661 relates to a wide area radio communication system wherein each of a plurality of central stations communicate with a plurality of peripheral stations and wherein a time-sharing scheme is used in order to avoid interference between adjacent stations. Each central station is provided with time coordination data by an external source and each peripheral station includes a clock and transmitting and receiving means.

US-A-4,633,463 discloses a communication system which includes a plurality of central stations and at least one remote station assigned to each such station. Directional antennas are used in order to exclude external interferences.

An object of the present invention is to overcome limitations and drawbacks of the prior art systems mentioned above. Another object of the present invention is to minimize interference between stations and to minimize the total power consumption of the system. To achieve these objects the method and system according to the invention have obtained the characteristics appearing from claim 1 and claim 5, respectively.

In order to explain the invention embodiments thereof will be described in more detail below with reference to the accompanying drawings, wherein
figs 1-6 are representations of prior art communication systems,
fig 7 shows a timing sequency in the system shown in figs 5 and 6,
fig 8 is a representation of the buffering principle which takes place in the system according to figs 5 and 6,
fig 9 is a view from above of an embodiment of a system according to the invention during a specific time interval,
fig 10 shows the system in fig 9 during another time interval,
fig 11 shows a central station according to the invention,
fig 12 shows another embodiment of the invention utilizing phase array antennas,
fig 13 is a representation of a timing synchronizing system utilized in an embodiment of the invention,
fig 14 is a representation of a phase displacement system utilized in an embodiment of the invention,
fig 15 is a representation of a system according to the invention,
figs 16, 17 and 18 are representations of a system according to the invention transmitting in duplex and semi duplex,
figs 19 and 20 are representations of different time frames for different subsystems in duplex and semiduplex,
fig 21 is a block diagram of a system configuration,
fig 22 is a representation of the configuration in fig 21
fig 23 is a block diagram of a sub-system, and figs 24 to 26 are representations of diffferent methods of connecting systems according to the invention to external networks.

The information transmission between two stations in a prior art system using spotted beams takes place during a specific time slot, many slots constituting a frame, and in a specific direction. The transmission is normally repeated continuously. With reference to figs 5 and 6 it is clear that when transmission is taking place between two stations, the stations are directed towards each other with regard to the transmitting as well as the receiving direction.

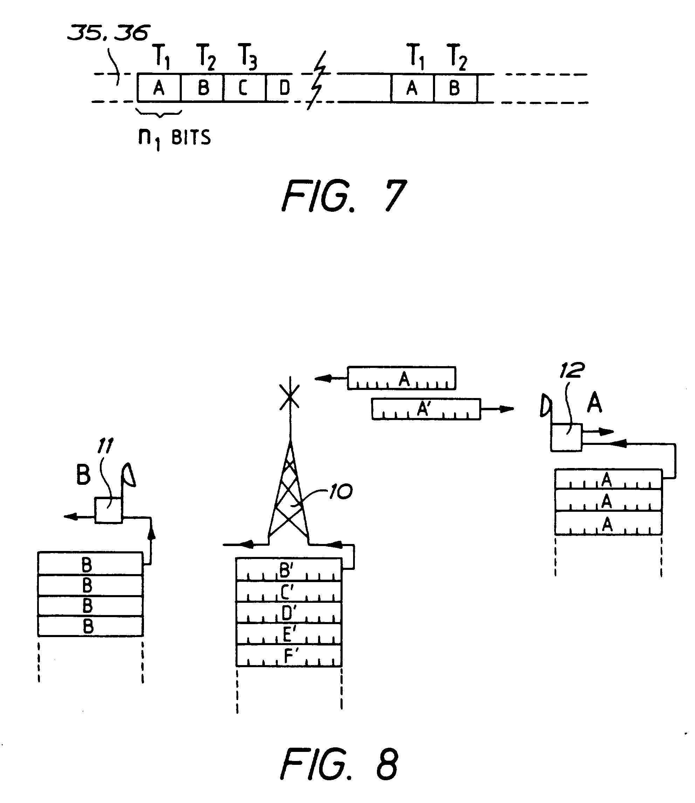

The time diagram in fig 7 shows how the transmission between stations is divided into frames or time intervals.

When the information flow is continuous the information is transmitted as packets in time slots which are stored and rebuilt at the receiving unit and then retransmitted from the system in the original shape. The transmission is transparent to the user. There is a certain delay in transmission mainly caused by the package transmission, the buffering and the rebuilding, see fig 8, in which 11 and 12 are references for peripheral stations and 10 for a central station. The time delay between each package or the repeated time slot in a frame is adjusted to the time delay acceptable in connected services. In public telephone networks a delay of up to 50 ms may be acceptable.

The wide area telecommunication, system according to the invention is intended for all types and combinations of telecommunication services, such as analog and digital telephone transmission, high quality sound and image transmission, low-speed asynchronous data transmission and synchronous data transmission, all services in corporation with other types of networks and services.

It is also possible to implement the system according to the invention for a specific service or for a specific combination of services. During the transmission phase the antenna of a central station is always directed towards a specific peripheral station, but a peripheral station may under certain circumstances, such as in mobile applications, utilize an omni directional antenna and/or a adaptive directional antenna.

Each station dynamically and continuously redirects itself to the next station in turn for transmission. To keep the system capacity high the redirection delay is made very short in relation to the time of the timeslots. In the system according to the invention the redirection time delays are about or less than 1 microsecond which means that the time losses due to redirection are marginal. At a channel capacity of 2 Mbite/s and 50 active stations less than 1 per cent of transmission time is lost due to the redirection.

The system according to the invention is intended for stationary peripheral stations as well as mobile type peripheral stations. In a system comprising stationary peripheral stations the geographical position of each of the stations is stored. Position data are utilized when the central stations calculate and control the peripheral stations transmitting and receiving direction, time assignment according to traffic demand and timing in other subsystems, power and when applicable carrier frequency in order to optimize capacity and quality and minimize interference. When a new station is connected or an active station is disconnected the system automatically recalculates transmission control data. Central stations use time slots in the frames during which the area covered by that central station is scanned to locate and identify any new station added and any previous active station disconnected or reconnected. Basically a central station of the system has three basic states or modes:
A) Identifying stations and compensating for distance variations, for correct timing and power control.
B) Controlling station traffic.
C) Transferring user and system information. Optionally the system performs also:
D) Scanning for identifying non-active and new stations and the locations thereof.

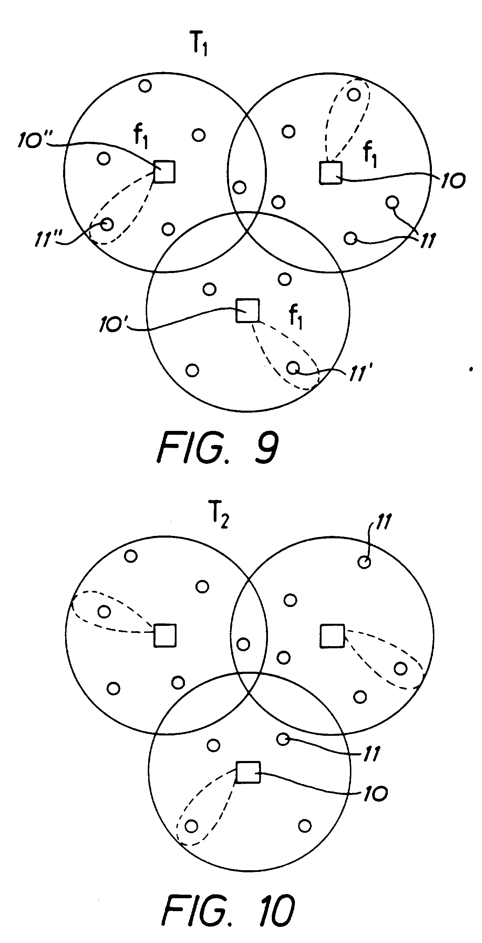

The system includes a central station antenna which is directed towards one specific peripheral station during short time intervals during which information is transferred, so as to achieve optimized signal strengths and minimized interference for the normal information exchange. The information exchange which is well defined in time as well as in direction makes possible a simultaneous reuse of the frequency in the vicinity of said stations, as long as the transimission direction during that time interval is different. From figs 9 and 10 it is apparent how three different central stations 10, 10', 10'' can transmit to three different peripheral stations 11, 11', 11'' and use the same frequency f₁. This is possible because of the highly directed antenna system, of the central station and because of the power, information transfer and timing control applied to the system. Fig 9 shows the transmission taking place during time interval t₁ and fig 10 during time interval t₂. During certain time periods the central stations search and scan for new stations or movements of stations. The central stations are not directed towards any specific peripheral station during said time periods.

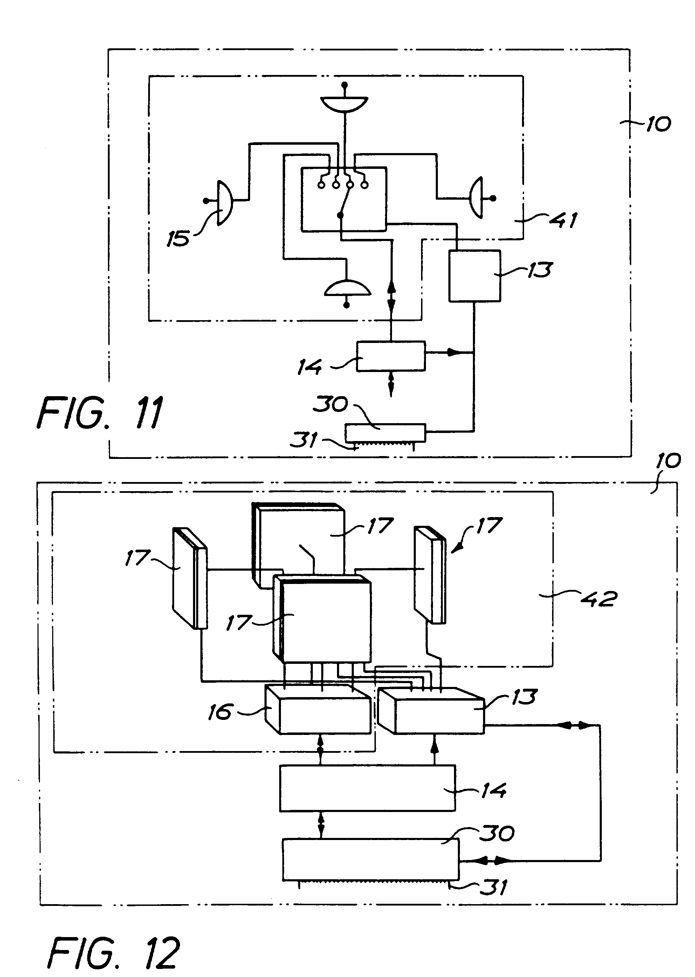

The system utilizes dynamically controlled antennas 41 and the principle of this type of antennas is shown in fig 11. In one implementation of the system phase array antennas 42 are used, see fig 12. The construction of the phase array antennas depends on the application. In fig 12 four plane phase array antenna elements 17, each of which covers 90°, are combined so as to cover a full circle for one radio transmitter/receiver. Alternatively, one plane phase array element is combined with one transmitter/receiver in order to allow the central station to serve a sector. Each of the elements is constructed to have a well defined transmission direction in space.

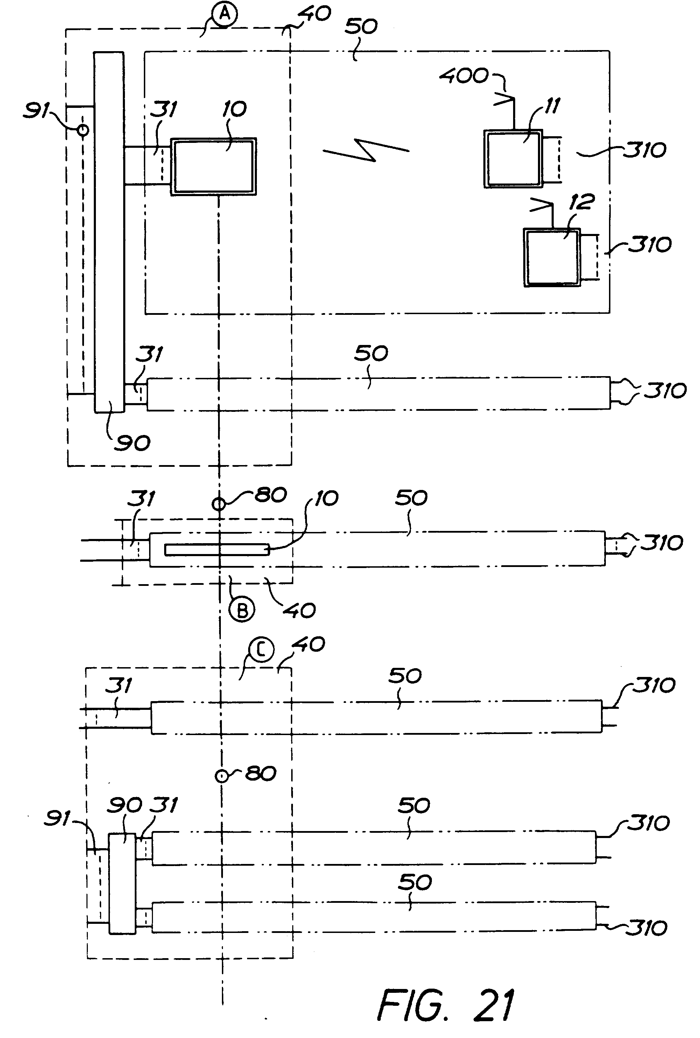

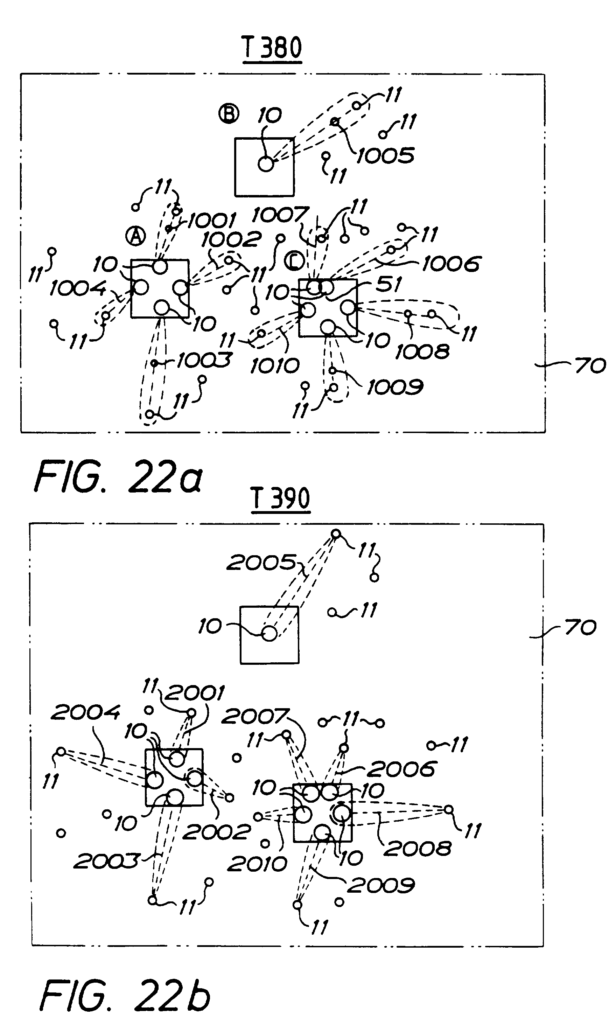

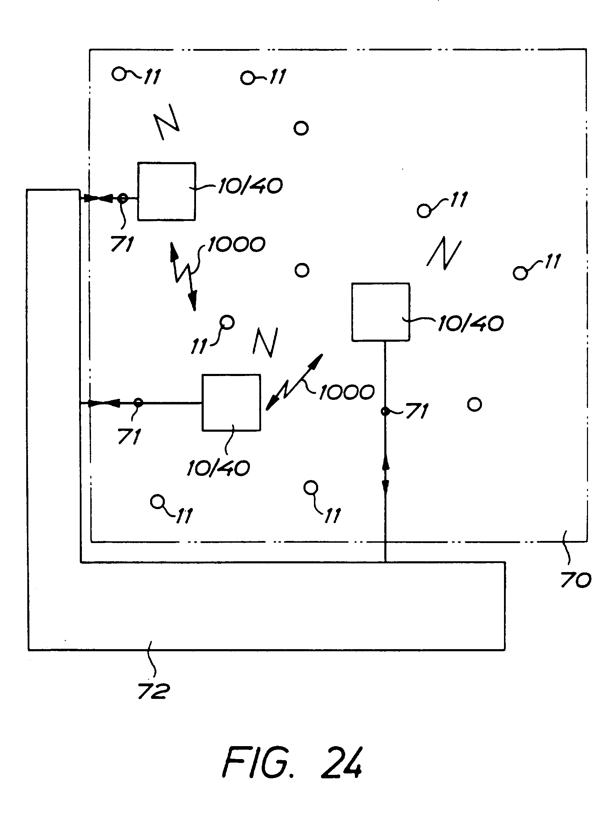

One central station 10 and the peripheral stations 11 connected thereto comprise one subsystem which combined with more subsystems forms a larger communication system that cover a principally unlimited area as illustrated in figs 21 and 22. Different configuration types are possible, such as those shown in figs 24, 25 and 26 with decentralized or hierarchical structures. Further, all or some of the stations may be provided with dynamically controlled directional antennas.

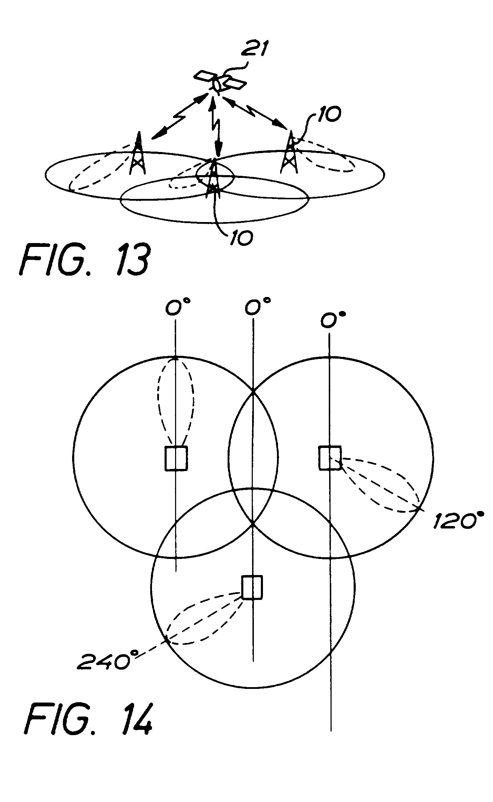

One implementation of timing control between subsystems is shown in fig 13 where the central stations 10 receive synchronizing signals from an external reference source and communication channel such as a satellite 21, radio/TV transmitter etc. The timing control and traffic coordination between subsystems to avoid interference could also take place through the public telephone network or through central stations which are set up to be synchronized and exchange control data with adjacent stations, 80, see figs 21 and 22. Compensation for and control of time reference differences, 34, between different adjacent sites may be included in advance by compensating for the relative time difference between different geographically separated stations. Alternatively, the central stations are provided with a frame stability which makes synchronization unnecessary. If synchronization is not applied adaptive fault detection methods are used to coordinate traffic in the subsystems.

Fig 14 shows a simplified arrangement to which there is applied a dynamic time slot allocation in dependence of the traffic for each central station indenpendent of traffic analyse on other central stations. To minimize the interference between central stations the scanning beam or beams at each central station can be phase delayed and/or combined with a quality detection to perform communication as mentioned above. Thus, in this way risk of interference is minimized without a dynamic traffic coordination between non-adjacent central stations.

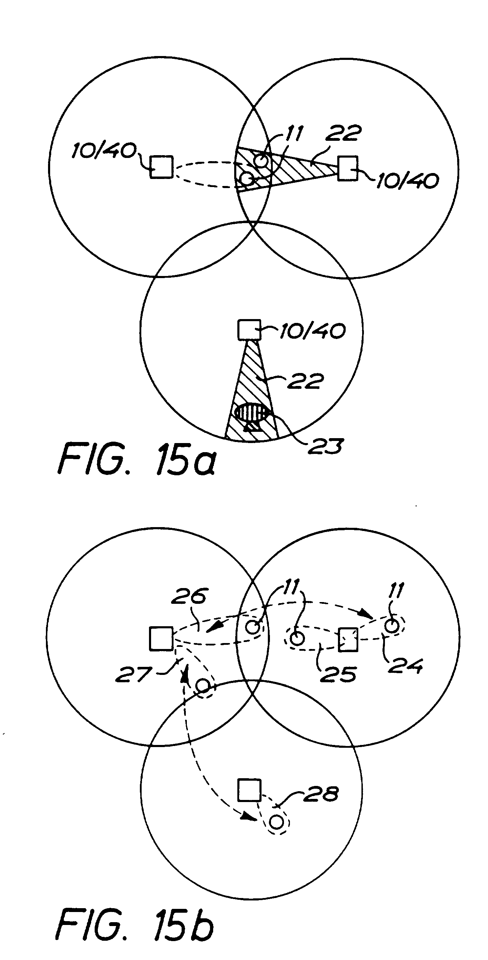

A way of avoiding interference between different substations is simply not to allow information exchange in some directions during some time intervals. Areas 22 in fig 15a are referenced as prohibited zones and no transmission is allowed in those areas. The unit giving the reference number 23 is a source of interference, which can be constant in time.

At certain time intervals a pair of stations in each subsystem are bound to interfere when they transfer information at the same frequency. See figure 15b. Two such stations are referenced as a pair at risk. 24, 25, 26, 27, 28. However, for fixed applications pairs at risk are known in advance and the time intervals given to the stations in a pair at risk are chosen by the control system so as to minimize the risk of interference.

By adjusting the transmission power for each station pair exchanging information to a level for achieving a certain expected transmission quality the level of interference is minimized and the information exchange is not performed with an unnecessary high quality. Fig 15b shows power diagrams 25, 26 for different stations situated at different distances from their central stations. In order to maintain a desired transmission quality in the system in unpredicted situations is fault detection applied. The influence from interference can be decreased by adapting forward error correction codes or by changing time slots or frequency.

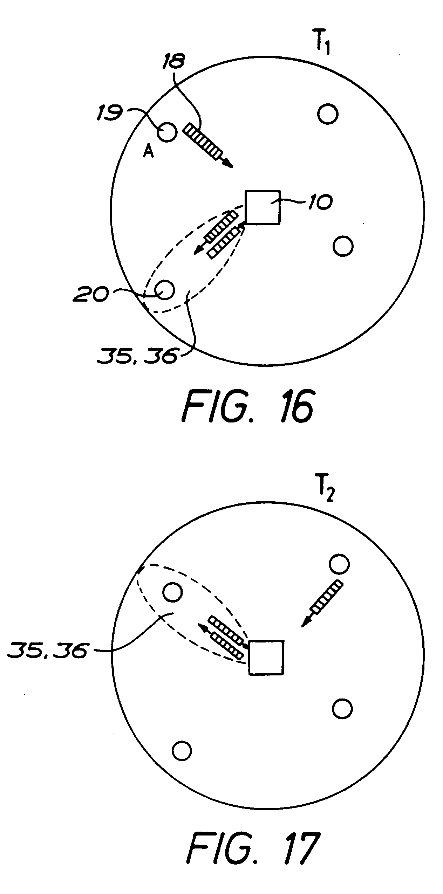

When a system according to the present invention is used for duplex transmission information packages to or from a central station are coordinated with respect to time intervals. In that way losses due to directional changes in time and capacity are minimized. Fig 16 and 17 show how the antenna system of one central station for one radio unit is directed in one specific direction at the time T1 and transmits and receives information packets to and from a peripheral station 20. At point T2 another packet is received at the central station from the peripheral station 19 and its corresponding packet is sent out to 19, in duplex mode.

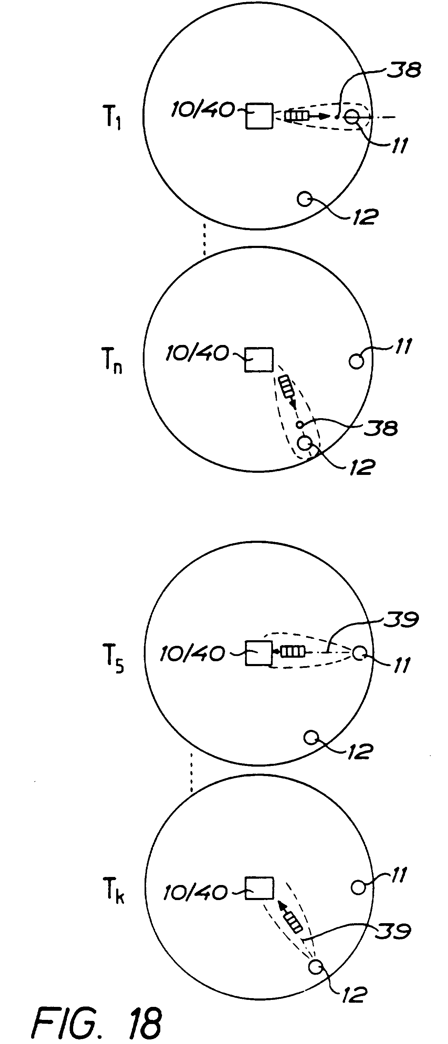

Fig 18 shows a similar process as described with reference to fig 16 and 17 but at different time slots T1, Tn, T5, Tk in semi duplex mode. The transmission process is separated between the central station and the peripheral stations as illustrated in the antenna diagram 38 and 39. 44 is the information packets sent by a central station and 45 is the information sent by the peripheral station. In semi duplex mode the central station coordinate the traffic flow to and from the peripheral stations and direct the antennas towards incoming packages from peripheral stations shortly before the information 45 is received by the antenna. Shortly after the transmission is completed the antenna is redirected. A central station controls each of the peripheral stations associated therewith with respect to the time intervals during which the peripheral station is allowed to transmit information. In that way the central station knows when information will be transmitted from each of the peripheral stations and when the information will be received. When such a package is received the antenna lobe 38 has just taken the proper direction. During the rest of the time period of each frame the central station exchanges information with other peripheral stations and in the next frame the antenna is again directed towards the mentioned station as long as the time slot is assigned.

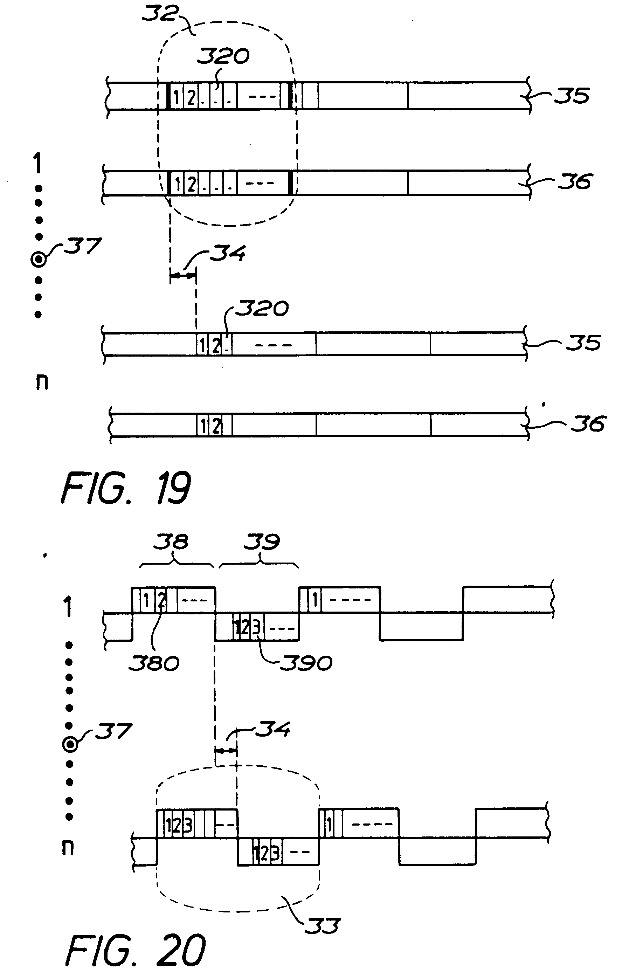

Fig 19 shows the duplex frame structure for one or several central stations 1..n. The transmission and receiving time are illustrated at 35 and 36. The total amount of time available during one frame is referenced by 32. One frame is devided into certain slots 320. The relative time difference between geographically separated central stations is referenced by 34.

Fig 20 shows the semi duplex mode where each subsystem or central station using the same radio carrier is separated in a transmission time for the central station and the peripheral stations 38 and 39. The total time for one frame for both directions is referenced by 33. The time slot assigment in each of the directions can be different which is shown at 380 and 390 in semi duplex mode the transmission direction to and from the peripheral stations is controlled by time slot allocation reservation which makes it possible to handle traffic of different capacity between ports in the system independently of the transmission direction. The semi duplex frame structure is separated in a transmission time period and a receiving time period in order to operate several different central stations at the same time on the same frequency, see fig 22, with minimized interference between subsystems. Said central stations can be adjacent or non-adjacent.

Fig 21 and 22 show an exemple of an implamentation of the system over a wide area. One or several central stations 10 form subsystems 50 together with peripheral stations 11 and 12. One or several central stations can be formed as one station or super central station 40 at the same site via a digital switch. The traffic within or between different subsystems may take place through an external digital switching device 90 in order to increase redundancy or to use each super central station more efficiently. Several subsystems 50 form a system 70. Synchronisation and coordination between subsystems and inter system data exchange is shown at 80. Connection ports to other networks are represented by 31 and 91 at the central or super central stations and by 310 at the peripheral stations. Coexistance of two subsystems that cover the same region is shown in figure 22a.

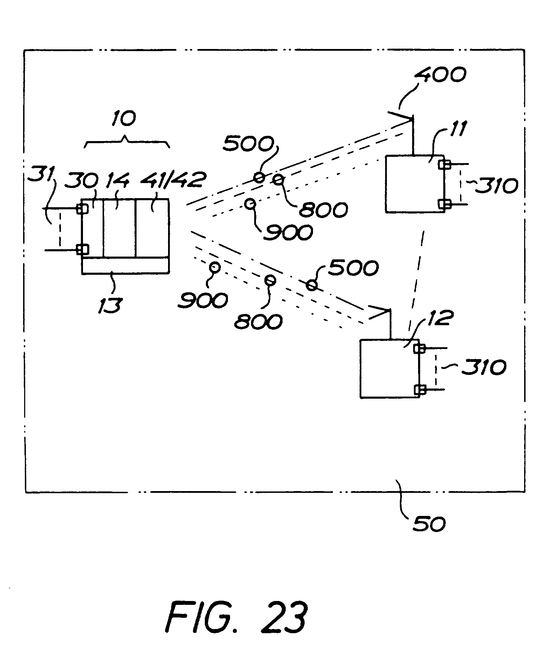

Fig 23 shows one subsystem 50 and under the central station 10 one or several separated peripheral stations 11 and 12 with its ports 310 where user traffic is to be connected. Use of data transmission is represented by 500. Signalling between central and peripheral stations is represented by 800 for the ports and by 900 for other signalling. Interference is further possible to minimize in the system by analysing the user information which is required to be sent through each subsystem. If so desired only information packets that carries changes or certain types of changes are transmitted through the system. When information is considered redundant and is not transmitted the information is instead reinserted at the corresponding destination port of the system. The information transfer between ports is controlled in the signalling 800 which requires less band width than usual data transfer 500. Data, such as silence or "on hook condition" in a telephone system and/or repaeted similar data streams or no data transmission from a computer, LAN, PABX, IMAGES, etc can be controlled by signalling between the stations. In this way the interference in the system is decreased. Further, the system capacity will be increased.

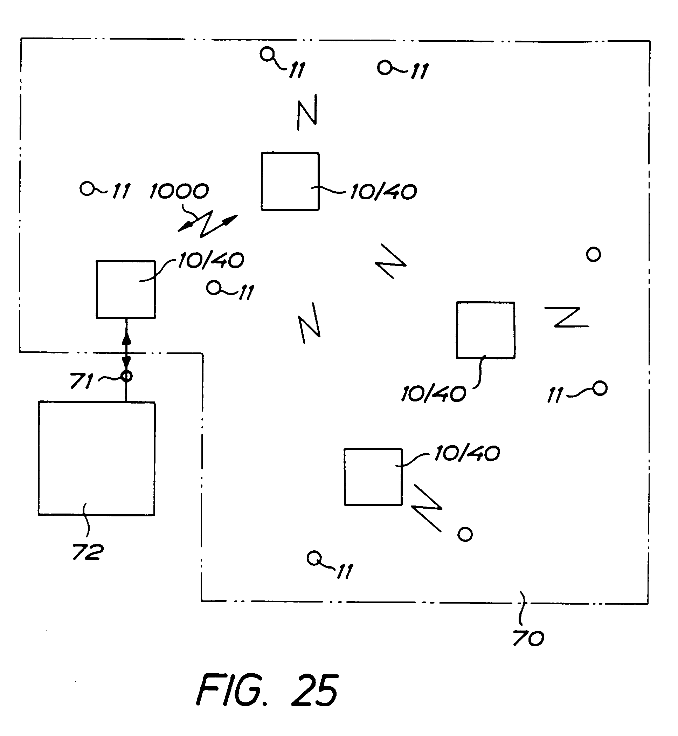

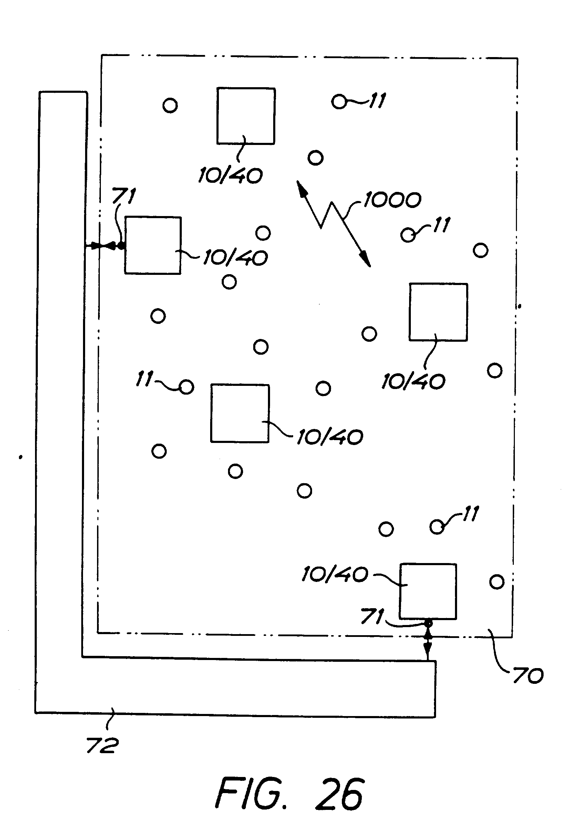

Fig 24, 25, 26 show examples of different system configurations. In fig 24 each of the super central stations or subsystems is connected to another network 72. In fig 25 connection to another network is made through one super central station or subsystem only, inter traffic between stations shown at 1000. Fig 26 shows a more complex and decentralized structure where some super central stations or central stations are terminated to other networks and some are not.

By allowing a plurality of geographically adjacent subsystems each having a possibility to cover 360° horizontally while using the same frequency, the frequency space effenciency is increased by a factor from 7 to at least 14 in relation to other methods, see fig 4, of wide radio, area networks. As the antenna system may also include vertical space control and as different users are separated in variable altitudes such as sky scrapers the factor is further increased.

When each central station is equipped with an antenna each covering a sector of 90° horizontally the frequency efficiency is still further improved by a factor of about 4 when interference is controlled efficiently. If such an arrangement includes two or more systems to cover the same area from the same site 51 the efficiency is still further improved. Each central and peripheral station is equipped with ports that allow multiplexed or unmultiplexed digital signals to be transmitted through the system. The ports 31; 91; 310 form the connection points between the users and the system. Said ports are designed in such a way that it is possible to achieve a secure and if required a compressed information exchange through the system for each service connected. This is done in order to avoid interference and to delete unnecessary information transfer which at some time intervals carries no significant data, see fig 23. This further improves the frequency efficiency and the interference risks are further decreased.

The secrecy of the system according to the present invention is also improved dramatically when information is transmitted in packages in different directions. By adjusting the transmission intensity in dependence of the actual traffic and quality needs the secrecy is further improved.

## Claims

1. Method of communication in a wide area radio communication network, said network comprising at least two Central stations (10), each Central Station being assigned to at least one Peripheral Station (11), each Central Station (10) and each Peripheral Station (11) having means for transmitting radio energy and receiving radio energy, characterized in that means are arranged in said Central Stations for communicating to and from said Central Stations by transferring radio signals in predetermed transmission directions during predetermed time intervals, said means for communicating including a directed antenna system (41), each Central Station transmitting and receiving radio signals to cover a service area;
that a total service area coverage of each Central Station is divided into different geographical sub service area segments covered during selected time segments;
that each Central Station operates in different sub-areas by controlling said directed antenna system (41) to operate in said sub-service area segment during predetermined time intervals;
that each of said Central Stations stores information about distance and direction to each assigned Peripheral Station;
that each Central Station coordinates each assigned Peripheral Station by distributing signal information to each Peripheral Station assigned thereto, said information including timing compensation with respect to the distance between said Central Station and said Peripheral Station assigned thereto, and including actual time intervals selected by said Central station for sending information to said Central Station from said Peripheral Station; and
that each Central Station coordinates the reception of information transmitted from each assigned Peripheral Station at said time intervals by directing during said time intervals the antenna of said Central Station towards said Peripheral Station.

2. Method according to claim 1 wherein the communication between each of said Central stations (10) and other stations is organised in a time division structure consisting of a time frame structure which is subdivided into a plurality of time slots.

3. Method according to claim 2, wherein within selected time slots to be used for the communication between a Central station (10) and each assigned Peripheral station (11) each Peripheral station adjusts the transmission time with respect to the distance between said stations, to maintain said time frame structure.

4. Method according to claim 2, wherein the transfer of radio signals through the antenna systems (41) of said Central station (10) is optimized with respect to a combination of optimum radio signal strength and minimal disturbance.

5. Method according to claim 2, wherein said Peripheral stations (11) communicate with said Central station (10) through a directed antenna systems (41), by directing an antenna lobe of said antenna system towards the antenna systems of said Central station.

6. Method according to claim 2, wherein error detection measures are applied to information transferred between each Central station and any assigned Peripheral station, in order to measure transmission quality.

7. Method according to claim 6, wherein a change of time slot selection in the communication between respective Central station and assigned Peripheral station is initiated when errors are detected.

8. Method according to claim 6, wherein a change of frequency is initiated when errors are detected.

9. Method according to claim 2, wherein said transferred signals include codes for error correction.

10. Method according to claim 2, wherein synchronizing signals arc applied to said Central stations.

11. Method according to claim 2, wherein the level of transmitted radio energy from at least said Central station to its assigned Peripheral station is controlled to achieve a predetermined level of transmission quality.

12. Method according to claim 2, where the radio capacity of each Central station and its associated Peripheral station is provided in a common frequency band for all stations where time frames of each Central station and its assigned Peripheral station are separated into more than one time slot, where the frame is separated into a send and a receive time interval, each of said time intervals representing a consequtive number of time slots.

13. Method according to claim 2, wherein said Peripheral station is stationary during communication with said Central station.

14. Method according to claim 2, wherein said Peripheral station is movable during communication with said Central station.

15. Method according to claim 2, wherein said division of a service area of a first Central station into different geographical subservice area segments in selected time segments is coordinated with a corresponding division in a second Central station to avoid interference, said first and second Central stations having overlapping service areas and utilizing overlapping frequence bands .

16. Method according to claim 2, wherein said distributed information including timing compensating data and time intervals is stored in said Peripheral station receiving said information.

17. A system for communicating in a wide area radio communication network, said network comprising at least two Central stations (10), and a plurality of Peripheral stations (11), each Central station being assigned to at least one Peripheral station, wherein each said Central station is provided with, means for transmitting and receiving radio signals to and from any assigned Peripheral station assigned thereto, characterized by means (13;16) for controlling a controllable directional antenna system (41) of said Central station in specific directions under selected specific time segments in at least two directions, by means (14) for storing position data like distance and direction of at least said associated Peripheral station; and by said Peripheral stations being provided with means for receiving timing information and distance information and means for storing said information in each Peripheral station in order to control the timing of the information transfer to said Central station with regard to the distance between said Peripheral station and said Central station.

18. A system according to claim 17, **characterised** in that said directional antenna system (41) includes a plurality of fixed antennas (15), each of which being directed into a specific direction.

19. A system according to claim 17, **characterised** in that said directional antenna system (41) includes a plurality of directable phase array antenna elements (17).

## Patentansprüche

1. Kommunikationsverfahren in einem Fern-Funkverkehrsnetz, wobei das Netz mindestens zwei Zentralstationen (10) aufweist, wobei jede Zentralstation mindestens einer Peripheriestation (11) zugeteilt ist, wobei jede Zentralstation (10) und jede Peripheriestation (11) Vorrichtungen zur Übertragung von Funkenergie und zum Empfang von Funkenergie aufweist, dadurch **gekennzeichnet** , daß in den Zentralstationen Vorrichtungen zur Übertragung auf und von den Zentralstationen durch Übermittlung von Funksignalen in vorgegebene Übertragungsrichtungen während vorgegebener Zeitintervalle angeordnet sind, wobei die Übertragungsvorrichtungen ein Richtantennensystem (41) aufweisen, wobei jede Zentralstation Funksignale überträgt und empfängt, um einen Versorgungsbereich abzudecken;
daß eine gesamte Versorgungsbereichsabdeckung jeder Zentralstation in verschiedene geographische Unterversorgungsbereichs-Segmente geteilt ist, die während ausgewählter Zeitsegmente abgedeckt werden;
daß jede Zentralstation in verschiedenen Unterbereichen arbeitet, indem sie das ausgerichtete Antennensystem (41) so steuert, daß es während vorgegebener Zeitintervalle in dem Unterversorgungsbereichs-Segment arbeitet;
daß jede der Zentralstationen Informationen über Entfernung und Richtung zu jeder zugeteilten Peripheriestation speichert;
daß jede Zentralstation jede zugeteilte Peripheriestation koordiniert, indem sie an jede ihr zugeteilte Peripheriestation Signalinformationen verteilt, wobei die Informationen eine Zeitkompensation im Hinblick auf die Entfernung zwischen der Zentralstation und der ihr zugeteilten Peripheriestation enthalten und zum Senden von Informationen von der Peripheriestation zur Zentralstation tatsächliche durch die Zentralstation ausgewählte Zeitintervalle enthalten; und
daß jede Zentralstation den Empfang von Informationen, die von jeder zugeteilten Peripheriestation zu den Zeitintervallen übertragen werden, koordiniert, indem sie während der Zeitintervalle die Antenne der Zentralstation auf die Peripheriestation richtet.

2. Verfahren nach Anspruch 1, dadurch gekennzeichnet, daß die Übertragung zwischen jeder der Zentralstationen (10) und anderen Stationen in einer Zeitaufteilungsstruktur organisiert ist, die aus einer Zeitrahmenstruktur besteht, die in eine Vielzahl von Zeitkanälen unterteilt ist.

3. Verfahren nach Anspruch 2, dadurch gekennzeichnet, daß innerhalb ausgewählter, für die Übertragung zwischen einer Zentralstation (10) und jeder zugeteilten Peripheriestation (11) zu verwendender Zeitkanäle jede Peripheriestation die Übertragungszeit im Hinblick auf die Entfernung zwischen den Stationen anpaßt, um die Zeitrahmenstruktur aufrechtzuerhalten.

4. Verfahren nach Anspruch 2, dadurch gekennzeichnet, daß die Übertragung von Funksignalen durch das Antennensystem (41) der Zentralstation (10) im Hinblick auf eine Kombination optimaler Funksignalstärke und minimaler Störung optimiert wird.

5. Verfahren nach Anspruch 2, dadurch gekennzeichnet, daß die Peripheriestationen (11) mit der Zentralstation (10) durch ein ausgerichtetes Antennensystem (41) in Verbindung stehen, indem eine Antennenkeule des Antennensystems auf die Antennensysteme der Zentralstation gerichtet wird.

6. Verfahren nach Anspruch 2, dadurch gekennzeichnet, daß zur Messung der Übertragungsqualität Fehlererkennungsmaßnahmen auf Informationen, die zwischen jeder Zentralstation und jeder zugeteilten Peripheriestation übertragenen werden, angewendet werden.

7. Verfahren nach Anspruch 6, dadurch gekennzeichnet, daß eine Änderung der Zeitkanalauswahl bei der Übertragung zwischen einer jeweiligen Zentralstation und einer zugeteilten Peripheriestation gestartet wird, wenn Fehler entdeckt werden.

8. Verfahren nach Anspruch 6, dadurch gekennzeichnet, daß eine Änderung der Frequenz gestartet wird, wenn Fehler entdeckt werden.

9. Verfahren nach Anspruch 2, dadurch gekennzeichnet, daß die übertragenen Signale Fehlerkorrekturcodes aufweisen.

10. Verfahren nach Anspruch 2, dadurch gekennzeichnet, daß an die Zentralstationen Synchronisierungssignale angelegt werden.

11. Verfahren nach Anspruch 2, dadurch gekennzeichnet, daß der Pegel der übertragenen Funkenergie von zumindest der Zentralstation auf ihre zugeteilte Peripheriestation gesteuert wird, um ein vorgegebenes Niveau an Übertragungsqualität zu erreichen.

12. Verfahren nach Anspruch 2, dadurch gekennzeichnet, daß die Funkkapazität jeder Zentralstation und ihrer zugeteilten Peripheriestation in einem für alle Stationen gemeinsamen Frequenzband vorgesehen ist, in dem Zeitrahmen jeder Zentralstation und ihrer zugeteilten Peripheriestation in mehr als einen Zeitkanal aufgeteilt sind, wobei der Rahmen in ein Sende- und ein Empfangszeitintervall aufgeteilt ist, wobei jedes der Zeitintervalle eine fortlaufende Zahl an Zeitkanälen darstellt.

13. Verfahren nach Anspruch 2, dadurch gekennzeichnet, daß die Peripheriestation während der Verbindung mit der Zentralstation ortsfest ist.

14. Verfahren nach Anspruch 2, dadurch gekennzeichnet, daß die Peripheriestation während der Verbindung mit der Zentralstation beweglich ist.

15. Verfahren nach Anspruch 2, dadurch gekennzeichnet, daß die Aufteilung eines Versorgungsbereichs einer ersten Zentralstation in verschiedene geographische Unterversorgungsbereichs-Segmente in ausgewählten Zeitsegementen mit einer entsprechenden Aufteilung in einer zweiten Zentralstation koordiniert ist, um Interferenz zu vermeiden, wobei die ersten und zweiten Zentralstationen sich überlappende Versorgungsbereiche aufweisen und sich überlappende Frequenzbänder verwenden.

16. Verfahren nach Anspruch 2, dadurch gekennzeichnet, daß die verteilten Informationen, die Zeitkompensationsdaten und Zeitintervalle aufweisen, in der die Informationen empfangenden Peripheriestation gespeichert werden.

17. Kommunikationssystem in einem Fern-Funkverkehrsnetz, wobei das Netz mindestens zwei Zentralstationen (10) und eine Vielzahl von Peripheriestationen (11) aufweist, wobei jede Zentralstation mindestens einer Peripheriestation zugeteilt ist, wobei jede Zentralstation mit Vorrichtungen zur Übertragung und zum Empfang von Funksignalen auf und von jeder ihr zugeteilten Peripheriestation versehen ist,
gekennzeichnet durch Vorrichtungen (13; 16) zur Steuerung eines steuerbaren Richtantennensystems (41) der Zentralstation in bestimmte Richtungen unter ausgewählten bestimmten Zeitsegmenten, in mindestens zwei Richtungen,
durch Vorrichtungen (14) zur Speicherung von Positionsdaten, wie Entfernung und Richtung, zumindest der zugehörigen Peripheriestation; und
dadurch, daß die Peripheriestationen mit Vorrichtungen zum Empfang von Zeitinformationen und Entfernungsinformationen und mit Vorrichtungen zur Speicherung der Informationen in jeder Peripheriestation versehen sind, um die Zeitsteuerung der Informationsübertragung auf die Zentralstation im Hinblick auf die Entfernung zwischen der Peripheriestation und der Zentralstation zu steuern.

18. System nach Anspruch 17, dadurch **gekennzeichnet** , daß das Richtantennensystem (41) eine Vielzahl von festen Antennen (15) aufweist, von denen jede in eine bestimmte Richtung ausgerichtet ist.

19. System nach Anspruch 17, dadurch **gekennzeichnet** , daß das Richtantennensystem (41) eine Vielzahl von ausrichtbaren phasengesteuerten Antennenelementen (17) aufweist.

## Revendications

1. Procédé de communication dans un réseau de radiocommunication de grande étendue, ledit réseau comprenant au moins deux stations centrales (10), chaque station centrale étant affectée à au moins une station périphérique (11), chaque station centrale (10) et chaque station périphérique (11) ayant des moyens pour émettre de l'énergie radio et recevoir de l'énergie radio, caractérisé en ce que des moyens sont agencés dans lesdites stations centrales pour communiquer dans les deux directions avec lesdites stations centrales en transférant des signaux radio dans des directions de transmission prédéterminées pendant des intervalles de temps prédéterminés, lesdits moyens de communication comprenant un système d'antenne orientée (41), chaque station centrale émettant et recevant des signaux radio pour couvrir une zone de service ;
la couverture totale d'une zone de service de chaque station centrale est partagée en différents segments géographiques de sous-zones de service, couverts pendant des segments de temps sélectionnés ;
chaque station centrale fonctionne dans différentes sous-zones en commandant ledit système d'antenne orientée (41) pour le faire fonctionner dans ledit segment de sous-zone de service pendant des intervalles de temps prédéterminés ;
chacune desdites stations centrales stocke des données de distance et de direction par rapport à chaque station périphérique affectée ;
chaque station centrale coordonne chaque station périphérique affectée en distribuant des signaux d'information à chaque station périphérique qui lui est affectée, lesdites informations comprenant une compensation de base de temps par rapport à la distance séparant ladite station centrale de ladite station périphérique qui lui est affectée, et comprenant des intervalles de temps réel sélectionnés par ladite station centrale pour envoyer des informations à ladite station centrale à partir de ladite station périphérique ; et
chaque station centrale coordonne la réception des informations transmises depuis chaque station périphérique affectée dans lesdits intervalles de temps en orientant pendant lesdits intervalles de temps l'antenne de ladite station centrale en direction de ladite station périphérique.

2. Procédé selon la revendication 1, dans lequel la communication entre chacune desdites stations centrales (10) et les autres stations est organisée selon une structure de division du temps consistant en une structure de trame de temps qui est subdivisée en une pluralité de créneaux de temps.

3. Procédé selon la revendication 2, dans lequel, à l'intérieur des créneaux de temps sélectionnés à utiliser pour la communication ente une station centrale (10) et chaque station périphérique affectée (11), chaque station périphérique ajuste le temps de transmission par rapport à la distance entre lesdites stations, pour maintenir ladite structure de trame de temps.

4. Procédé selon la revendication 2, dans lequel le transfert des signaux radio au moyen des systèmes d'antenne (41) de ladite station centrale (10) est optimisé par rapport à une combinaison de l'intensité optimale du signal radio et d'une perturbation minimale.

5. Procédé selon la revendication 2, dans lequel des stations périphériques (11) communiquent avec ladite station centrale (10) au moyen de systèmes d'antennes orientées (41), en orientant un lobe d'antenne dudit système d'antennes en direction des systèmes d'antenne de ladite station centrale.

6. Procédé selon la revendication 2, dans lequel des mesures de détection d'erreurs sont appliquées aux informations transférées entre chaque station centrale et une quelconque station périphérique affectée, afin de mesurer la qualité de la transmission.

7. Procédé selon la revendication 6, dans lequel un changement de sélection de créneau de temps dans la communication entre une station centrale respective et une station périphérique affectée est lancé lorsque des erreurs sont détectées.

8. Procédé selon la revendication 6, dans lequel un changement de fréquence est lancé quand des erreurs sont détectées.

9. Procédé selon la revendication 2, dans lequel lesdits signaux transférés comprennent des codes de correction d'erreurs.

10. Procédé selon la revendication 2, dans lequel des signaux de synchronisation sont appliqués auxdites stations centrales.

11. Procédé selon la revendication 2, dans lequel le niveau de l'énergie radio transmise par au moins ladite station centrale à sa station périphérique affectée est commandé pour atteindre un niveau prédéterminé de qualité de transmission.

12. Procédé selon la revendication 2, dans lequel la capacité radio de chaque station centrale et de sa station périphérique associée est prévue dans une bande de fréquence commune à toutes les stations, dans laquelle des trames de temps de chaque station centrale et de sa station périphérique affectée sont séparées en plusieurs créneaux de temps, dans lequel la trame est séparée en un intervalle d'émission et un intervalle de réception, chacun desdits intervalles de temps représentant un nombre séquentiel de créneaux de temps.

13. Procédé selon la revendication 2, dans lequel ladite station périphérique est fixe pendant la communication avec ladite station centrale.

14. Procédé selon la revendication 2, dans lequel ladite station périphérique est mobile pendant la communication avec ladite station centrale.

15. Procédé selon la revendication 2, dans lequel ledit partage d'une zone de service d'une première station centrale en différents segments géographiques de sous-zones pendant des segments de temps sélectionnés est coordonné avec un partage correspondant d'une seconde station centrale pour éviter des interférences, lesdites première et seconde stations centrales ayant des zones de service empiétant l'une sur l'autre et utilisant des bandes de fréquence empiétantes.

16. Procédé selon la revendication 2, dans lequel lesdites informations distribuées comprenant des données de compensation de base de temps et des intervalles de temps sont stockés dans ladite station périphérique recevant lesdites informations.

17. Système de communication dans un réseau de radiocommunication de grande étendue, ledit réseau comprenant au moins deux stations centrales (10), et une pluralité de stations périphériques (11), chaque station centrale étant affectée à au moins une station périphérique ,
dans lequel chacune desdites stations centrales est équipée de moyens de transmission et de réception de signaux radio vers et en provenance d'une quelconque station périphérique qui lui est affectée, caractérisé par des moyens (13 ; 16) pour commander un système d'antenne directionnelle contrôlable (41) de ladite station centrale dans des directions spécifiques pendant des segments de temps spécifiques sélectionnés dans au moins deux directions; par des moyens (14) pour stocker des données de position telles que la distance et la direction d'au moins ladite station périphérique associée; et par le fait que lesdites stations périphériques sont équipées de moyens pour recevoir des informations de base de temps et des informations de distance et des moyens pour stocker lesdites informations dans chaque station périphérique afin de commander la base de temps de transfert des informations vers ladite station centrale en fonction de la distance séparant ladite station périphérique de ladite station centrale.

18. Système selon la revendication 17, caractérisé en ce que ledit système d'antenne directionnelle (41) comprend une pluralité d'antennes fixes (15), dont chacune est orientée dans une direction particulière.

19. Système selon la revendication 17, caractérisé en ce que chaque système d'antenne directionnelle (41) comprend une pluralité d'éléments d'antenne (17), orientables dans une réseau de phase.
